# EUROPEAN PATENT SPECIFICATION

(11) **EP 3 974 548 B1**
(45) Date of publication and mention of the grant of the patent: **14.05.2025**
(21) Application number: 20810744.1
(22) Date of filing: 20.05.2020
(51) Int. Cl.: C21D 1/10, C21D 1/42, C21D 9/28, C21D 9/00, C21D 1/18, C21D 1/667, H05B 6/10, H05B 6/36, H05B 6/40

(54) **TRAVERSE HARDENING DEVICE AND TRAVERSE HARDENING METHOD**
VORRICHTUNG ZUM HÄRTEN EINER TRAVERSE UND VERFAHREN ZUM HÄRTEN EINER TRAVERSE
APPAREIL DE DURCISSEMENT TRANSVERSAL ET PROCÉDÉ DE DURCISSEMENT TRANSVERSAL

(30) Priority: 23.05.2019 JP 2019096624
(43) Date of publication of application: 30.03.2022
(73) Proprietor: NIPPON STEEL CORPORATION, Chiyoda-ku Tokyo 100-8071 (JP)
(72) Inventor: YAMANE, Akihito, Tokyo 100-8071 (JP); HATA, Toshiyuki, Tokyo 100-8071 (JP); KOZUKA, Chihiro, Tokyo 100-8071 (JP)
(74) Representative: Zimmermann & Partner Patentanwälte mbB
(86) International application number: PCT/JP2020/019979
(87) International publication number: WO 2020/235602

(56) References cited:
- EP-A1- 3 048 859
- CN-A- 102 181 615
- CN-U- 202 116 607
- JP-A- 2015 108 188
- JP-A- S4 731 224
- JP-B2- 3 300 290

## Description

### [Technical Field]

The present invention relates to a traverse hardening device and a traverse hardening method.

Priority is claimed on Japanese Patent Application No. 2019-096624, filed in Japan on May 23, 2019.

### [Background Art]

Conventionally, a shaft-like body has been subjected to traverse hardening by induction heating to increase a fatigue strength of the shaft-like body. "Traverse hardening" as used herein means performing hardening while moving a coil member or the like with respect to a shaft-like body in an axial direction of the shaft-like body.

In induction heating, a shaft-like body is inserted into a primary coil member formed in a solenoidal shape, and a high-frequency current is caused to flow in the primary coil member to heat the shaft-like body using induction heating. In induction heating, a shaft-like body is more efficiently heated as a distance between the shaft-like body and the primary coil member becomes smaller. Therefore, when a shaft-like body includes a main body part and a small diameter part provided in the main body part and having a smaller diameter than the main body part, there is a problem that the small diameter part is not easily heated compared to the main body part.

In regard to this problem, a traverse hardening device including a secondary coil member that has an outer diameter smaller than an inner diameter of a primary coil member on an inner side of the primary coil member has been proposed (see Patent Documents 1 to 3, for example). The secondary coil member is formed in an O-shape or a C-shape. In the proposed device using the secondary coil, since a distance between a shaft-like body and a coil member close to the shaft-like body does not change as much between the main body part and the small diameter part, the main body part and the small diameter part can be heated equally.

In these traverse hardening devices, since a plurality of coil members are concentrically disposed, distances between the shaft-like body and the coil members close to the shaft-like body are uniform in a circumferential direction. Since a coil member having a large number of turns and satisfactory current efficiency can be used, a shaft-like body can be heated uniformly and efficiently with a small amount of current.

CN 102181615A and JP 3300290B2 disclose induction coils.

### [Citation List]

### [Patent Document]

[Patent Document 1]
   Japanese Examined Patent Application, Second Publication No. S52-021215
[Patent Document 2]
   Japanese Unexamined Patent Application, First Publication No. 2015-108188
[Patent Document 3]
   Japanese Unexamined Patent Application, First Publication No. 2000-87134

### [Summary of the Invention]

### [Problems to be Solved by the Invention]

However, when a secondary coil formed in an O shape or a C shape is utilized as in the related art described above, it is not possible to freely dispose or take a second coil in or outside of a gap between a primary coil and a shaft-like body (particularly, small diameter part) while the primary coil is traversing relative to the shaft-like body (that is, during traverse hardening). In order to realize this, it is necessary to introduce a complicated mechanism into a traverse hardening device. Thus, this leads to an increase in development costs and the like.

For this reason, in the related art, there has been a demand for the development of a traverse hardening device capable of hardening a shaft-like body having a form in which a diameter changes along an axis with a relatively simple constitution.

The present invention was made in view of the above circumstances, and an object thereof is to provide a traverse hardening device capable of hardening a shaft-like body having a form in which a diameter changes along an axis with a relatively simple constitution, and a traverse hardening method which can be realized using the traverse hardening device.

### [Means for Solving the Problem]

The present invention is as described in the attached claims, to solve the above-described problems and achieve the object.

### [Effects of the Invention]

According to each of the above aspects of the present invention, it is possible to provide a traverse hardening device capable of hardening a shaft-like body having a form in which a diameter changes along an axis with a relatively simple constitution, and a traverse hardening method which can be realized using the traverse hardening device.

### [Brief Description of Drawings]

FIG. 1A is a diagram showing the results of studies by the inventors of the present invention which is the basis of the present invention.
FIG. 1B is a diagram showing the results of studies by the inventors of the present invention which is the basis of the present invention.
FIG. 2 is a schematic side view showing a partial cutout portion of a traverse hardening device according to an embodiment of the present invention.
FIG. 3 is a diagram showing an example of a primary coil according to the embodiment.
FIG. 4A is a first explanatory view associated with a procedure for manufacturing the primary coil.
FIG. 4B is a first explanatory view associated with a procedure for manufacturing the primary coil.
FIG. 5A is a second explanatory view associated with a procedure for manufacturing the primary coil.
FIG. 5B is a second explanatory view associated with a procedure for manufacturing the primary coil.
FIG. 6A is a third explanatory view associated with a procedure for manufacturing the primary coil.
FIG. 6B is a third explanatory view associated with a procedure for manufacturing the primary coil.
FIG. 7A is a fourth explanatory view associated with a procedure for manufacturing the primary coil.
FIG. 7B is a fourth explanatory view associated with a procedure for manufacturing the primary coil.
FIG. 8 is a fifth explanatory view associated with a procedure for manufacturing the primary coil.
FIG. 9 is a first explanatory view associated with a traverse hardening method according to the embodiment.
FIG. 10 is a second explanatory view associated with the traverse hardening method.
FIG. 11 is a third explanatory view associated with the traverse hardening method.
FIG. 12 is a fourth explanatory view associated with the traverse hardening method.
FIG. 13 is a fifth explanatory view associated with the traverse hardening method.
FIG. 14 is a diagram showing the results of simulation analysis of a surface temperature distribution of a shaft-like body when the shaft-like body is subjected to induction heating using only a primary coil having a general cross-sectional shape (in the case of a comparative example).
FIG. 15 is a diagram showing the results of simulation analysis of a surface temperature distribution of a shaft-like body when the shaft-like body is subjected to induction heating using a primary coil having a specific cross-sectional shape (in the case of an example of the present invention).
FIG. 16A is a diagram showing a modified example of a primary coil having a specific cross-sectional shape.
FIG. 16B is a diagram showing another modified example of the primary coil having a specific cross-sectional shape.
FIG. 16C is a diagram showing another modified example of the primary coil having a specific cross-sectional shape.

### [Embodiment(s) for implementing the Invention]

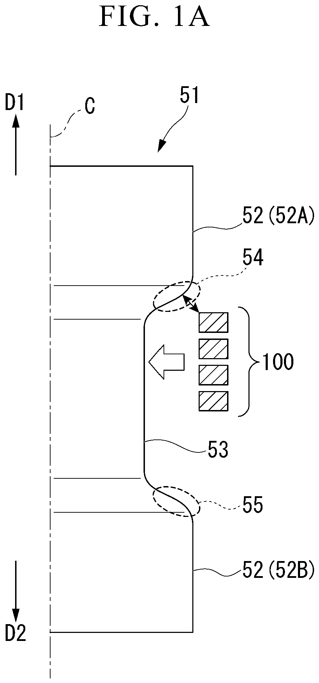

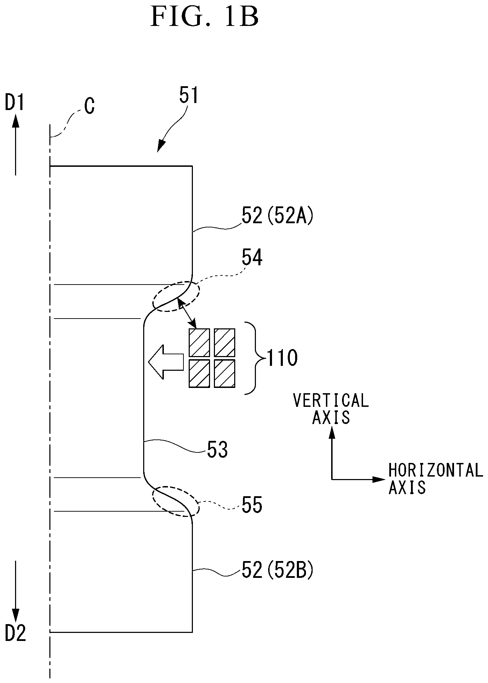

First, a shaft-like body 51 which is a body to be heated will be described with reference to FIGS. 1A and 1B. As shown in FIGS. 1A and 1B, the shaft-like body 51 includes a small diameter part 53 provided on an intermediate section of a main body part 52 in an axis C direction and the main body part 52. The main body part 52 and the small diameter part 53 are each formed in a columnar shape and an axis of the small diameter part 53 coincides with an axis C of the main body part 52.

In the following description, a portion of the main body part 52 disposed on one side D1 in the axis C direction with respect to the small diameter part 53 is referred to as a "first main body part 52A". A portion of the main body part 52 disposed on the other side D2 in the axis C direction with respect to the small diameter part 53 is referred to as a "second main body part 52B".

The first main body part 52A, the small diameter part 53, and the second main body part 52B are each formed in a columnar shape and are disposed on a common axis C. An outer diameter of the small diameter part 53 is smaller than outer diameters of the first main body part 52A and the second main body part 52B.

In order to transform a metal structure of a hardened place of the shaft-like body 51 into austenite as described above, normally, it is necessary to heat the shaft-like body 51 to a temperature of an Ac1 point or higher which exceeds 700°C. A primary coil 100 as shown in FIG. 1A is generally utilized for heating the shaft-like body 51. The primary coil 100 is a coil having a solenoidal shape and is formed of a strand of a coil wound in a spiral shape. If the primary coil 100 is caused to traverse in the axis C direction so that the shaft-like body 51 passes inside the primary coil 100 in a radial direction while causing a high-frequency electric current to flow through the primary coil 100, eddy currents sequentially occur on a surface of the shaft-like body 51 due to an electromagnetic induction phenomenon. As a result, the surface of the shaft-like body 51 is heated through heat generation according to a Joule's law.

In order to induce an eddy current on a surface of the shaft-like body 51 which can be heated to a high temperature of an Ac1 point or higher, it is necessary to cause a large current to flow through the primary coil 100 as well. For example, when a large current is caused to flow through a one-turn coil, the power efficiency decreases and the coil also easily overheats. For this reason, generally, as in the primary coil 100 shown in FIG. 1A, measures are taken to reduce an electric current value per coil by utilizing a coil which is wound a plurality of times in a spiral shape having a form in which the coil is wound along a surface of the shaft-like body 51. The reason why the coil is wound in the spiral shape having the form in which the coil is wound along the surface of the shaft-like body 51 is that, if a distance between the coil and the shaft-like body 51 increases, an influence of a change in magnetic flux density caused due to the coil on the shaft-like body 51 is reduced.

Here, for example, as shown in FIG. 1A, when the primary coil 100 reaches a position corresponding to an upper end portion of the small diameter part 53 (an end portion on the one side D1 in the axis C direction), an upper end portion of the primary coil 100 comes close to a corner portion 54 which is a place in which a diameter starts to change from the first main body part 52A toward the small diameter part 53. At this time, due to the skin effect, a magnetic flux is concentrated at the corner portion 54 close to the upper end portion of the primary coil 100. On the other hand, when the small diameter part 53 is heated, a distance between the primary coil 100 and the shaft-like body 51 is maximized. Thus, it is necessary to increase an amplitude value of a high-frequency electric current flowing through the primary coil 100. As a result, when the primary coil 100 reaches the position shown in FIG. 1A, the corner portion 54 at which a magnetic flux is concentrated overheats to a high temperature which exceeds a target temperature.

Such an overheating phenomenon of the corner portion 54 can also occur in a corner portion 55 which is a place in which a diameter starts to change from the second main body part 52B toward the small diameter part 53.

The inventors of the present invention have studied a method for minimizing an overheating phenomenon occurring in the corner portions 54 and 55 as described above using a secondary coil. As a result, in order to minimize the overheating phenomenon, it became clear that a very complicated mechanical mechanism in which a secondary coil can be freely disposed or removed in or from a gap between the primary coil 100 and the shaft-like body 51 (the small diameter part 53) needed to be introduced into a traverse hardening device.

Thus, the inventors of the present invention have diligently studied a measure capable of hardening a shaft-like body having a form in which a diameter changes along an axis with a relatively simple constitution. As a result, for example, it was found that, by employing a coil wound a plurality of times in the shape as shown in FIG. 1B as a primary coil 110, it is possible to minimize an overheating phenomenon occurring in the corner portions 54 and 55 without using a secondary coil or the like.

As shown in FIG. 1B, when a horizontal axis represents a radial direction of the primary coil 110 and a vertical axis represents a direction orthogonal to the radial direction in a plane orthogonal to a circumferential direction of the primary coil 110, a cross-sectional image of the primary coil 110 which appears in the plane appears in a form of segmentations by a matrix of 2 pieces vertically×2 pieces horizontally.

If the primary coil 110 having such a cross-sectional shape is utilized, as shown in FIG. 1B, when the primary coil 110 reaches a position corresponding to the upper end portion of the small diameter part 53, it is possible to keep the upper end portion of the primary coil 110 away from the corner portion 54. As a result, since it is possible to minimize the concentration of a magnetic flux on the corner portion 54, it is possible to minimize an overheating phenomenon occurring in the corner portion 54. Similarly, it is also possible to minimize an overheating phenomenon occurring in the corner portion 55.

On the other hand, if the primary coil 110 having such a cross-sectional shape is utilized, a distance between the shaft-like body 51 and the primary coil 110 increases. Thus, there is a concern that it will be difficult to induce an eddy current required for performing heating to a target temperature on a surface of the shaft-like body 51. However, as a result of the analysis by the inventors of the present invention, it was confirmed that an eddy current necessary and sufficient for performing heating to the target temperature can be induced on the surface of the shaft-like body 51 (the analysis result will be described later).

The present invention has been completed on the basis of the above findings and an embodiment of the present invention will be described in detail below with reference to the drawings.

### [Traverse hardening device]

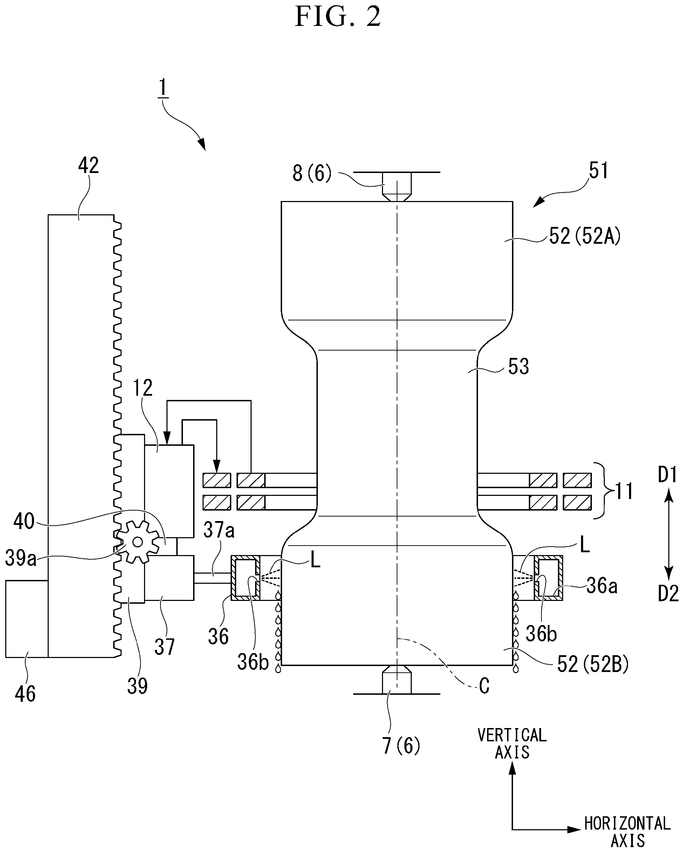

FIG. 2 is a schematic side view showing a partial cutout portion of a traverse hardening device 1 according to the embodiment. As shown in FIG. 2, the traverse hardening device 1 is a device for performing traverse hardening on the shaft-like body 51 such as an axle for a railroad vehicle using a high-frequency electric current.

The shaft-like body 51 includes the main body part 52, and the small diameter part 53 provided on the intermediate section of the main body part 52 in the axis C direction. The main body part 52 and the small diameter part 53 are each formed in a columnar shape and the axis of the small diameter part 53 coincides with the axis C of the main body part 52.

In the following description, a portion of the main body part 52 disposed on the one side D1 in the axis C direction with respect to the small diameter part 53 is referred to as the "first main body part 52A". A portion of the main body part 52 disposed on the other side D2 in the axis C direction with respect to the small diameter part 53 is referred to as the "second main body part 52B".

The first main body part 52A, the small diameter part 53, and the second main body part 52B are each formed in a columnar shape and are disposed on the common axis C. The outer diameter of the small diameter part 53 is smaller than the outer diameters of the first main body part 52A and the second main body part 52B.

The shaft-like body 51 is formed of a conductive material such as carbon steel, low alloy steel containing not less than 95% by weight of iron (Fe), and the like which have ferrite.

The traverse hardening device 1 includes a support member 6, a primary coil 11, a current transformer 12 (electric current supply device), a cooling ring 36, a pump 37 (cooling liquid supply device), uniaxial actuators (39, 40, 42), and a control device 46.

As shown in FIG. 2, the support member 6 includes a lower center 7 and an upper center 8. The lower center 7 supports the second main body part 52B of the shaft-like body 51 from below the second main body part 52B. The upper center 8 supports the first main body part 52A of the shaft-like body 51 from above the first main body part 52A. The lower center 7 and the upper center 8 support the shaft-like body 51 so that the axis C is directed in an upward/downward direction, the one side D1 in the axis C direction is directed upward, and the other side D2 is directed downward.

The primary coil **11** is a coil which has an inner diameter larger than the outer diameter of the main body part 52 and has a solenoidal shape. As shown in FIG. 2, a cross-sectional image of the primary coil 11 which appears in the plane appears in a form of segmentations by a matrix of 2 pieces vertically×2 pieces horizontally when a horizontal axis represents a radial direction of the primary coil 11 in a plane orthogonal to the circumferential direction of the primary coil 11 and a vertical axis represents a direction orthogonal to the radial direction thereof. That is to say, on the right side of the paper surface of the axis C of FIG. 2, a cross-sectional image of the primary coil 11 appears in a form of segmentations by a matrix of 2 pieces vertically×2 pieces horizontally. Similarly, on the left side of the paper surface of the axis C of FIG. 2, a cross-sectional image of the primary coil 11 appears in a form of segmentations by a matrix of 2 pieces vertically×2 pieces horizontally.

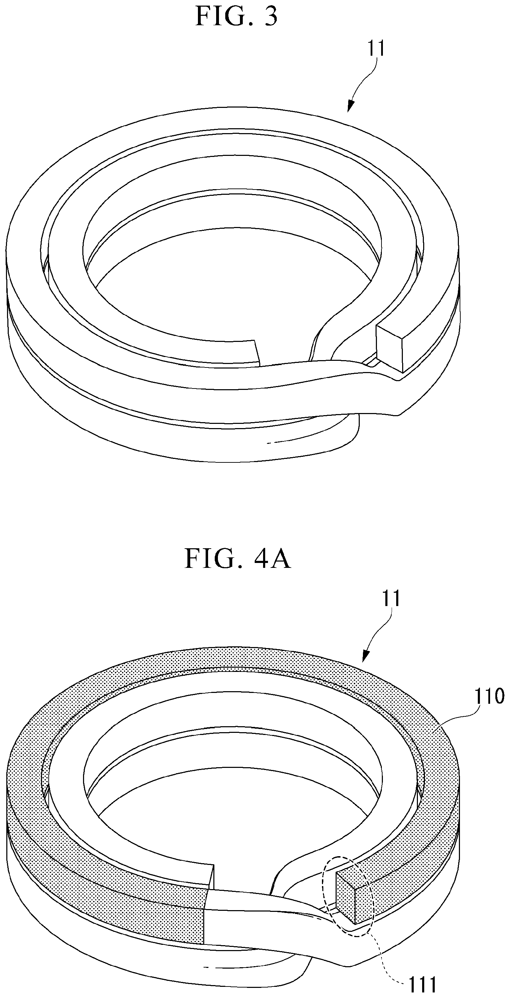

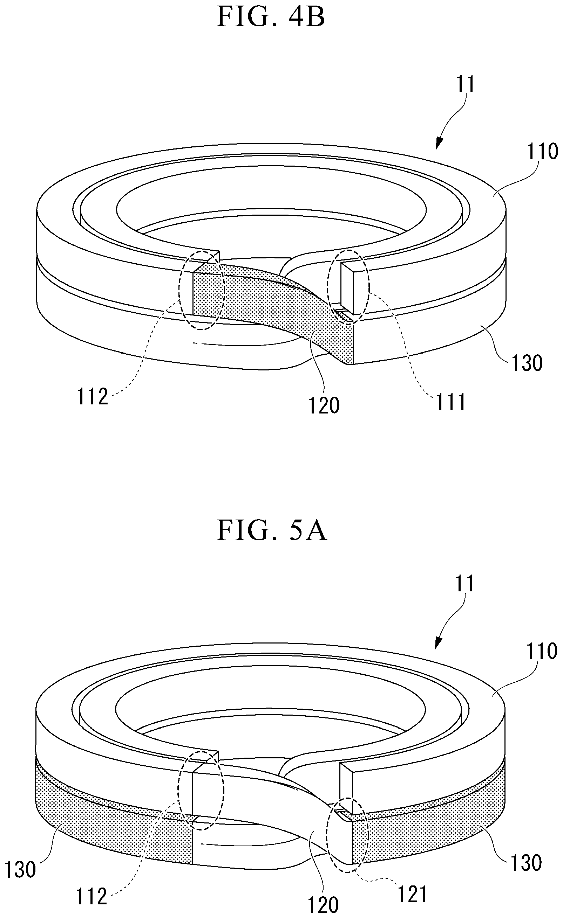

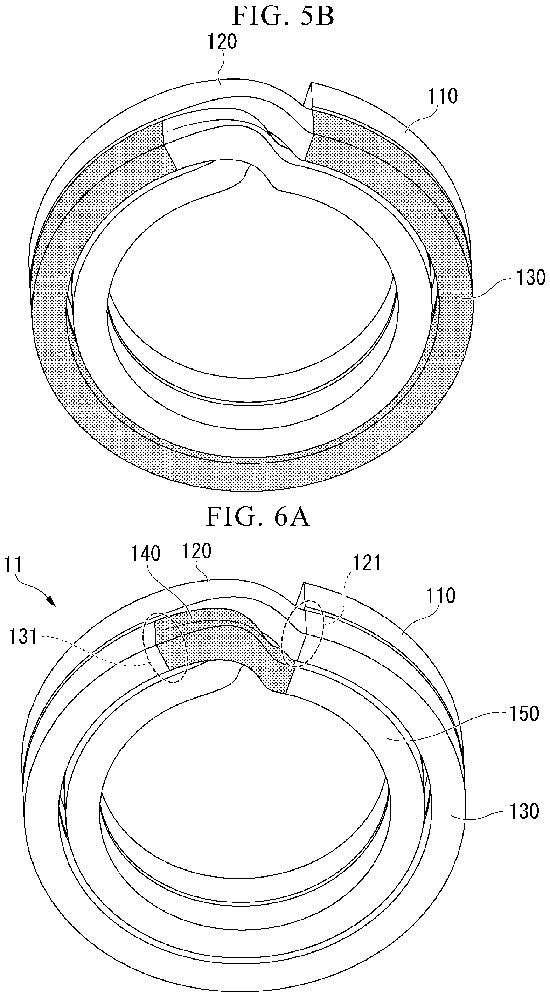

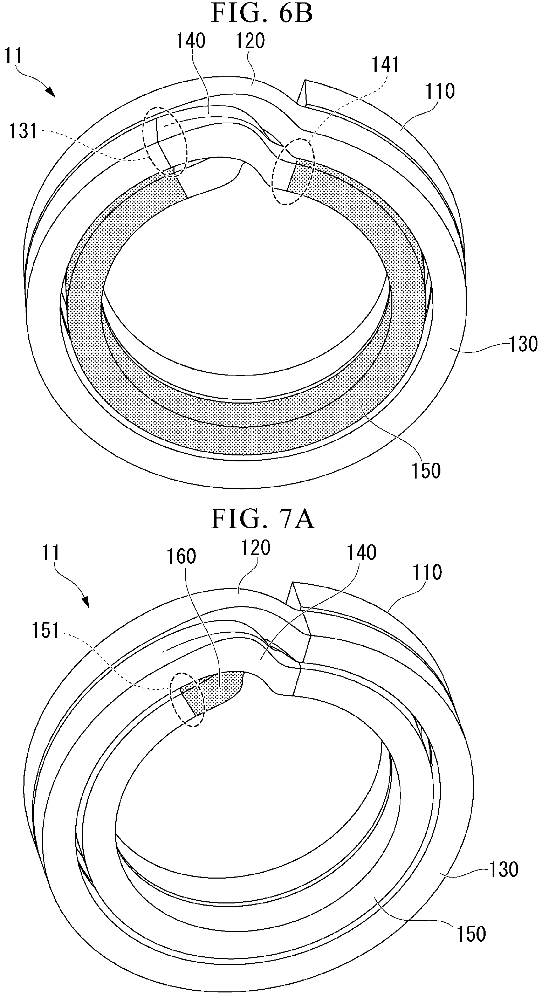

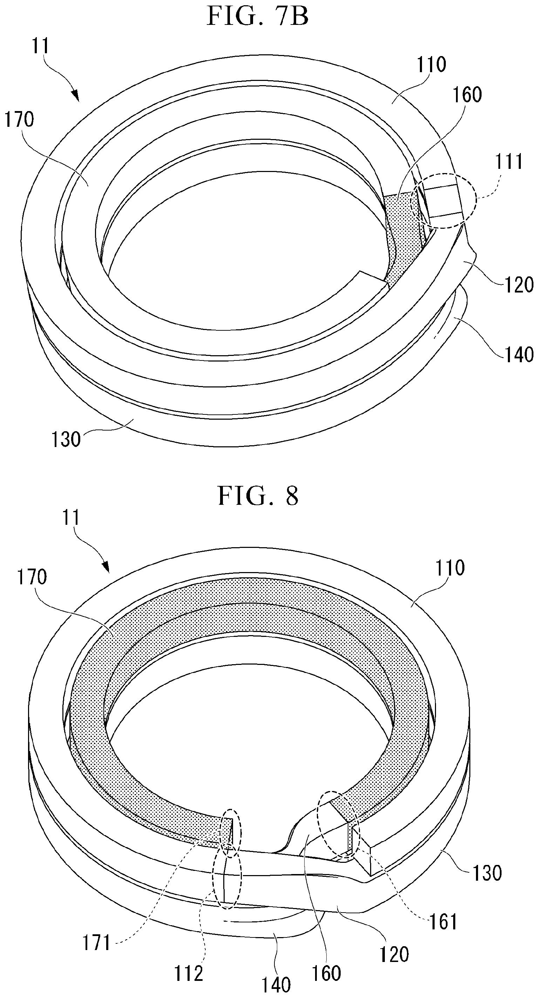

FIG. 3 shows an example of the primary coil 11 having the cross-sectional shape as described above. FIG. 3 is a perspective view of the primary coil 11. The primary coil 11 shown in FIG. 3 can be manufactured through the following procedure.
(1) As shown in FIG. 4A, first, when a portion indicated by reference numeral 111 is a first extraction end portion of the primary coil 11, an outer upper stage portion 110 which is a place on an outer side in the radial direction and an upper side (the one side D1 in the axis C direction) of the primary coil 11 is formed by winding a coil strand in a solenoidal shape using the first extraction end portion 111 as a starting point. The outer upper stage portion 110 is a portion shown in gray in FIG. 4A.
(2) Subsequently, as shown in FIG. 4B, when the coil strand is caused to extend to move downward from a distal end portion 112 (the end portion opposite to the first extraction end portion 111) of the outer upper stage portion 110 toward a position directly below the first extraction end portion 111, a first connection portion 120 connecting between an outer lower stage portion 130 which will be described later and the outer upper stage portion 110 is formed. The first connection portion 120 is a portion shown in gray in FIG. 4B.
(3) Subsequently, as shown in FIG. 5A, when the coil strand is wound in a solenoidal shape to a position directly below the distal end portion 112 of the outer upper stage portion 110 using a distal end portion 121 of the first connection portion 120 as a starting point, the outer lower stage portion 130 which is a place on an outer side in the radial direction and a lower side (the other side D2 in the axis C direction) of the primary coil 11 is formed. The outer lower stage portion 130 is formed to have the same inner diameter and outer diameter as the outer upper stage portion 110. FIG. 5B is a diagram of the outer lower stage portion 130 when viewed from below. The outer lower stage portion 130 is a portion shown in gray in FIGS. 5A and 5B.
(4) Subsequently, as shown in FIG. 6A, when the coil strand is caused to be bent and extend from a distal end portion 131 of the outer lower stage portion 130 toward a position adjacent to an inside of the distal end portion 121 of the first connection portion 120 in the radial direction, a second connection portion 140 connecting between an inner lower stage portion 150 which will be described later and the outer lower stage portion 130 is formed. The second connection portion 140 is a portion shown in gray in FIG. 6A.
(5) Subsequently, as shown in FIG. 6B, when the coil strand is wound in a solenoidal shape to a position adjacent to an inside of the distal end portion 131 of the outer lower stage portion 130 in the radial direction using a distal end portion 141 of the second connection portion 140 as a starting point, the inner lower stage portion 150 which is a place on an inner side in the radial direction and a lower side of the primary coil 11 is formed. The inner lower stage portion 150 is a portion shown in gray in FIG. 6B.
(6) Subsequently, as shown in FIGS. 7A and 7B, when the coil strand is caused to extend to move upward from a distal end portion 151 of the inner lower stage portion 150 toward a position adjacent to an inside of the first extraction end portion 111 in the radial direction, a third connection portion 160 connecting between an inner upper stage portion 170 which will be described later and the inner lower stage portion 150 is formed. The third connection portion 160 is a portion shown in gray in FIGS. 7A and 7B.
(7) Finally, as shown in FIG. 8, when the coil strand is wound in a solenoidal shape to a position adjacent to an inside of the distal end portion 112 of the outer upper stage portion 110 in the radial direction using a distal end portion 161 of the third connection portion 160 as a starting point, the inner upper stage portion 170 which is a place on an inner side in the radial direction and an upper side of the primary coil 11 is formed. The inner upper stage portion 170 is formed to have the same inner diameter and outer diameter as the inner lower stage portion 150. A distal end portion of the inner upper stage portion 170 is a second extraction end portion 171 of the primary coil 11. The inner upper stage portion 170 is a portion shown in gray in FIG. 8.

The primary coil 11 shown in FIG. 3 can be prepared through the procedure as described above. In the embodiment, an outer diameter of the primary coil 11 means an outer diameter of the outer upper stage portion 110 and the outer lower stage portion 130 and an inner diameter of the primary coil 11 means an inner diameter of the inner lower stage portion 150 and the inner upper stage portion 170.

Referring to FIG. 2 again, description will be provided below continuously.

The respective end portions (the first extraction end portion 111 and the second extraction end portion 171) of the primary coil 11 are electrically and mechanically connected to the current transformer 12. The current transformer 12 is an electric current supply device which supplies a high-frequency electric current to the primary coil 11 under the control of the control device 46. That is to say, a high-frequency electric current flows between the first extraction end portion 111 and the second extraction end portion 171 of the primary coil 11.

The cooling ring 36 is a solenoidal shape member having an inner diameter larger than the outer diameter of the main body part 52. An internal space 36a is formed in the cooling ring 36. A plurality of nozzles 36b communicating with the internal space 36a are formed in an inner circumferential surface of the cooling ring 36 so as to be away from each other in the circumferential direction. The shaft-like body 51 is coaxially inserted inside the cooling ring 36 in the radial direction. The cooling ring 36 is disposed closer to the other side D2 in the axis C direction than the primary coil 11.

The pump 37 is joined to the cooling ring 36 via a water supply pipe 37a. The pump 37 is a cooling liquid supply device which supplies a cooling liquid L such as water into the internal space 36a of the cooling ring 36 via the water supply pipe 37a under the control of the control device 46. The cooling liquid L supplied into the internal space 36a of the cooling ring 36 is ejected toward an outer circumferential surface of the shaft-like body 51 through the plurality of nozzles 36b to cool the shaft-like body 51.

The primary coil 11, the current transformer 12, the cooling ring 36, and the pump 37 are fixed to a support plate 39. Pinions 39a are formed on the support plate 39. A motor 40 configured to drive the pinions 39a is attached to the support plate 39.

The pinions 39a of the support plate 39 meshes with a rack 42. If the motor 40 is driven, the pinions 39a rotates forward or backward. Thus, the support plate 39 traverses upward or downward (that is, in the axis C direction) with respect to the rack 42.

The rack 42 may be a ball screw. In this case, the plurality of pinions 39a may be disposed to have the ball screw disposed therebetween.

The support plate 39 having the pinions 39a described above, the motor 40, and the rack 42 are mechanical elements constituting an example of the uniaxial actuators of the present invention. That is to say, each of the uniaxial actuators composed of these mechanical elements is configured to enable positioning of the primary coil 11 in the axis C direction which supporting the primary coil 11 and the cooling ring 36 so that the shaft-like body 51 passes inside the primary coil 11 and the cooling ring 36 in the radial direction and the primary coil 11 is disposed on the one side D1 in the axis C direction with respect to the cooling ring 36.

The control device 46 includes an arithmetic circuit (not shown) and a memory (not shown). The memory has a control program or the like for driving the arithmetic circuit stored therein. The control device 46 is connected to the current transformer 12, the pump 37, and the motor 40 (the mechanical element of the uniaxial actuator) and synchronously controls these operations in accordance with the control program.

### [Traverse hardening method]

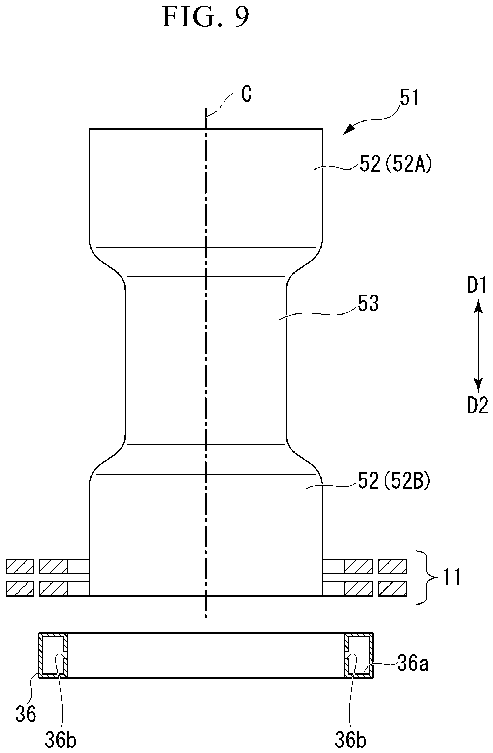

A traverse hardening method realized using the traverse hardening device 1 configured as described above will be described below with reference to FIGS. 9 to 13. The traverse hardening method according to the embodiment has, as a basic process, a preparatory process (first step) and a hardening process (second step).

In the preparatory process, the shaft-like body 51 which is a body to be heated and the traverse hardening device 1 including the above constitution are prepared. Moreover, the upper center 8 supports an end surface of the first main body part 52A on an upper side (the one side D1 in the axis C direction) so that the axis C of the shaft-like body 51 is perpendicular to a horizontal plane and the lower center 7 supports an end surface of the second main body part 52B on a lower side (the other side D2 in the axis C direction) (refer to FIG. 2). In this case, the one side D1 (upper side) in the axis C direction is a direction in which the primary coil 11 and the cooling ring 36 moves forward.

In the hardening process, first, the control device 46 of the traverse hardening device 1 performs, as an initial setting process, a process for traversing the primary coil 11 to an initial position (traverse start position) set in advance in the axis C direction and making the primary coil 11 stand by.

To be specific, as shown in FIG. 9, as an initial setting process, the control device 46 controls the motor 40 of the uniaxial actuator so that the primary coil 11 stands by at a traverse start position set at a position corresponding to a lower end portion of the second main body part 52B. The traverse start position of the primary coil 11 may be set to a position corresponding to the lower end portion of the second main body part 52B. Alternatively, the traverse start position of the primary coil 11 may be set to a position which is away by a distance shorter than a coil width of the primary coil 11 in a direction orthogonal to the radial direction from the lower end portion of the second main body part 52B further to the other side D2 (lower side) in the axis C direction. In other words, the traverse start position may be set to a position in which the entire shaft-like body 51 can be subjected to induction heating through traversing (upward movement) of the primary coil 11.

As described above, the uniaxial actuator including the support plate 39, the motor 40, and the rack 42 is configured to enable positioning of the primary coil 11 in the axis C direction while supporting the primary coil 11 and the cooling ring 36 so that the shaft-like body 51 passes coaxially inside the primary coil 11 and the cooling ring 36 in the radial direction and the primary coil 11 is disposed on the one side D1 (upper side) in the axis C direction with respect to the cooling ring 36. For this reason, when the uniaxial actuator composed of these mechanical elements is controlled, it is possible to traverse the primary coil 11 to the traverse start position and make the primary coil 11 stand by in a state in which the primary coil 11 is disposed on the upper side (forward movement direction side) with respect to the cooling ring 36.

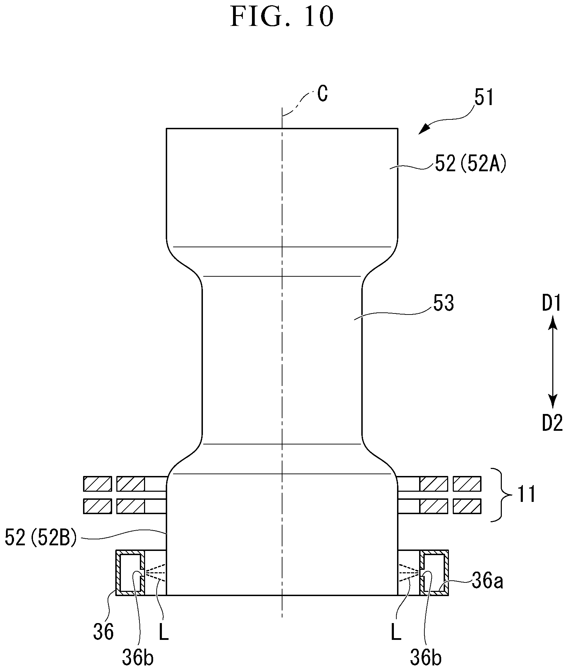

Subsequently, after the completion of the initial setting process as described above, as shown in FIG. 10, the control device 46 controls the motor 40 of the uniaxial actuator so that the primary coil 11 traverses (moves upward) from the traverse start position toward the one side D1 (forward movement direction side) in the axis C direction. At this time, the cooling ring 36 also moves upward together with the primary coil 11 while a state in which the primary coil 11 is disposed on the upper side (forward movement direction side) with respect to the cooling ring 36 is being maintained. The control device 46 synchronously controls the current transformer 12, the pump 37, and the motor 40 of the uniaxial actuator so that a high-frequency electric current is supplied to the primary coil 11 and the cooling liquid L is supplied to the cooling ring 36 while the primary coil 11 and the cooling ring 36 are traversing in a forward movement direction.

In this way, the current transformer 12, the pump 37, and the motor 40 of the uniaxial actuator are synchronously controlled. Thus, it is possible to move upward the primary coil 11 and the cooling ring 36 in the forward movement direction so that the shaft-like body 51 (second main body part 52B) passes inside the primary coil 11 and the cooling ring 36 in the radial direction while a high-frequency electric current is being supplied to the primary coil 11 and the cooling liquid L is being supplied to the cooling ring 36 in a state in which the primary coil 11 is disposed on the forward movement direction side with respect to the cooling ring 36.

When the primary coil 11 moves upward in the axis C direction while receiving the supply of a high-frequency electric current, the second main body part 52B is subjected to continuous induction heating in the axis C direction and a metal structure of a surface of the second main body part 52B transforms into austenite. At this time, since the cooling ring 36 also moves upward in the form in which the cooling ring 36 follows the primary coil 11, immediately after the second main body part 52B is subjected to induction heating, the second main body part 52B is continuously cooled in the axis C direction through the injection of the cooling liquid L from the cooling ring 36. As a result, the metal structure of the surface of the second main body part 52B transforms from the austenite into hard martensite. In this way, as the primary coil 11 and the cooling ring 36 move upward, the second main body part 52B is seamlessly hardened.

After the primary coil 11 has passed through the second main body part 52B, the primary coil 11 then continues to move upward toward the forward movement direction side so that the small diameter part 53 of the shaft-like body 51 passes inside the primary coil 11 in the radial direction. Thus, following the second main body part 52B, the small diameter part 53 is subjected to continuous induction heating in the axis C direction and the metal structure of the surface of the small diameter part 53 transforms into austenite. When the small diameter part 53 is heated, a distance between the primary coil 11 and the shaft-like body 51 is maximized. Thus, the control device 46 controls the current transformer 12 so that an amplitude value of a high-frequency electric current flowing through the primary coil 11 increases.

While the primary coil 11 is passing through the small diameter part 53, the cooling ring 36 also moves upward in the form in which the cooling ring 36 follows the primary coil 11. For this reason, immediately after the small diameter part 53 is subjected to induction heating, the small diameter part 53 is continuously cooled in the axis C direction through the injection of the cooling liquid L from the cooling ring 36. As a result, the metal structure of the surface of the small diameter part 53 transforms from the austenite into hard martensite. In this way, as the primary coil 11 and the cooling ring 36 move upward, the small diameter part 53 is seamlessly hardened following the second main body part 52B.

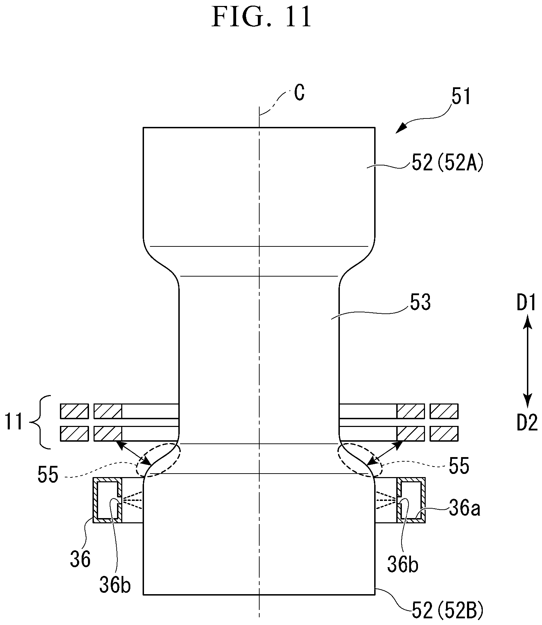

FIG. 11 shows a state in which the primary coil 11 has reached a position corresponding to the lower end portion of the small diameter part 53. Reference numeral 55 indicates a corner portion which is a place in which a diameter starts to change from the second main body part 52B toward the small diameter part 53. As shown in FIG. 11, when the primary coil 11 has reached the position corresponding to the lower end portion of the small diameter part 53, it is possible to keep the lower end portion of the primary coil 11 away from the corner portion 55 of the shaft-like body 51. As a result, since it is possible to minimize the concentration of a magnetic flux on the corner portion 55, it is also possible to minimize an overheating phenomenon occurring at the corner portion 55.

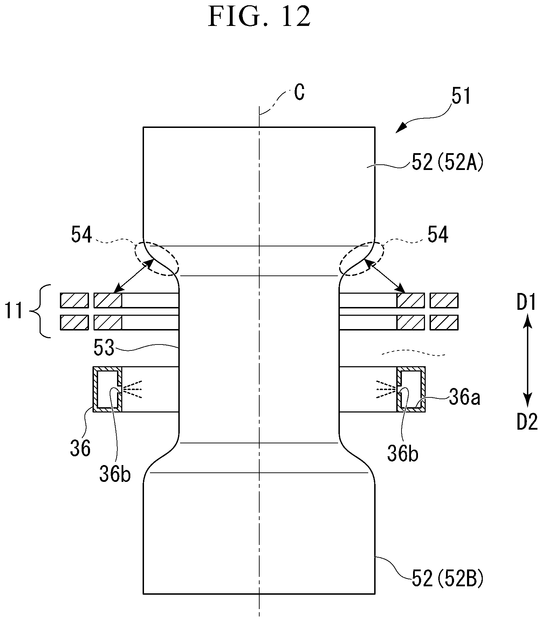

FIG. 12 shows a state in which the primary coil 11 has reached a position corresponding to the upper end portion of the small diameter part 53. Reference numeral 54 indicates a corner portion which is a place in which a diameter starts to change from the first main body part 52A toward the small diameter part 53. As shown in FIG. 12, when the primary coil 11 has reached the position corresponding to the upper end portion of the small diameter part 53, it is possible to keep the upper end portion of the primary coil 11 away from the corner portion 54 of the shaft-like body 51. As a result, since it is possible to minimize the concentration of a magnetic flux on the corner portion 54, it is also possible to minimize an overheating phenomenon occurring at the corner portion 54.

After the primary coil 11 has passed through the small diameter part 53, the primary coil 11 then continues to move upward toward the forward movement direction so that the first main body part 52A of the shaft-like body 51 passes inside the primary coil 11 in the radial direction. Thus, following the small diameter part 53, the first main body part 52A is subjected to continuous induction heating in the axis C direction and the metal structure of the surface of the first main body part 52A transforms into austenite. When the first main body part 52A is heated, a distance between the primary coil 11 and the shaft-like body 51 returns to a minimum, the control device 46 controls the current transformer 12 so that an amplitude value of a high-frequency electric current flowing through the primary coil 11 returns to the original value.

While the primary coil 11 is passing through the first main body part 52A, the cooling ring 36 also moves upward following the primary coil 11. For this reason, immediately after the first main body part 52A has been subjected to induction heating, the first main body part 52A is continuously cooled in the axis C direction through the injection of the cooling liquid L from the cooling ring 36. As a result, the metal structure of the surface of the first main body part 52A transforms from the austenite into hard martensite. In this way, as the primary coil 11 and the cooling ring 36 move upward, the first main body part 52A is seamlessly hardened following the small diameter part 53.

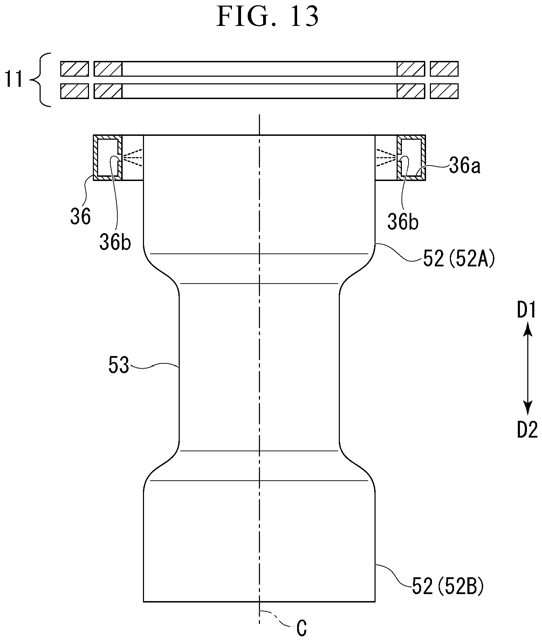

Also, as shown in FIG. 13, finally, the control device 46 controls the motor 40 of the uniaxial actuator so that the primary coil 11 moves upward to a traverse stop position set to a position away from the first main body part 52A to the one side D1 in the axis C direction and the primary coil 11 stops at the traverse stop position. The control device 46 stops the supply of a high-frequency electric current when the primary coil 11 exceeds an upper end of the first main body part 52A. On the other hand, the current transformer 12 and the pump 37 are synchronously controlled together with the uniaxial actuator so that the cooling liquid L is continuously supplied to the cooling ring 36 until the primary coil 11 stops at the traverse stop position.

Through the process as described above, when the primary coil 11 has reached the traverse stop position, the entire shaft-like body 51 has been hardened.

As described above, according to the embodiment, when the primary coil 11 having a specific cross-sectional shape is utilized, it is possible to minimize an overheating phenomenon occurring at the corner portion 54 and the corner portion 55 of the shaft-like body 51 without utilizing a secondary coil or the like. That is to say, according to the embodiment, it is possible to provide the traverse hardening device 1 capable of hardening the shaft-like body 51 having a shape in which an outer diameter changes along the axis with a relatively simple constitution and the traverse hardening method which can be realized using the traverse hardening device 1.

Although the embodiment of the present invention has been described above, the present invention is not limited to the embodiment described above and various modifications can be provided within the scope of the attached claims.

For example, in the embodiment, the shaft-like body 51 may not be disposed so that the axis C is disposed in the upward/downward direction (vertical direction) and the axis C may be disposed to be inclined with respect to the upward/downward direction. In this case, the primary coil 11 and the cooling ring 36 traverse to be inclined in the upward/downward direction.

Although the shaft-like body 51 is assumed to be an axle for a railroad vehicle, the shaft-like body 51 may be another shaft-like body such as a ball screw.

### [Analysis result]

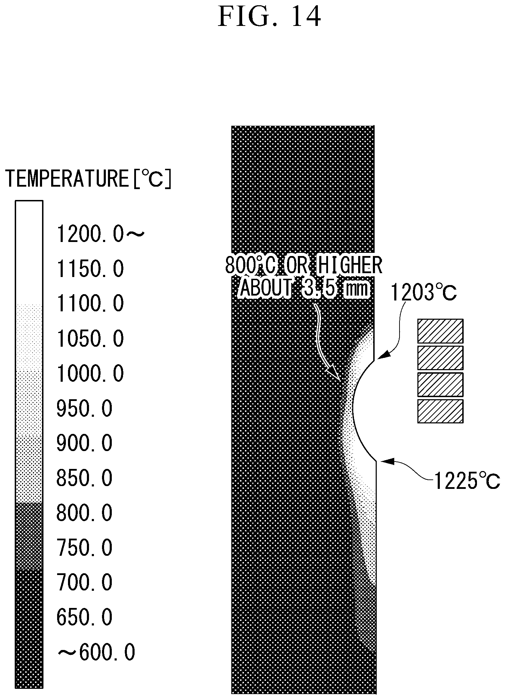

FIG. 14 shows the results of simulation analysis of a surface temperature distribution of the shaft-like body 51 when the shaft-like body 51 is subjected to induction heating using the primary coil 100 (refer to FIG. 1A) having a general cross-sectional shape. FIG. 14 shows only the analysis result of the right half of a vertical cross-sectional view of the shaft-like body 51 with respect to the axis C.

In this simulation, the outer diameter of the main body part 52 (the first main body part 52A, the second main body part 52B) was set to 198 mm and the outer diameter (minimum diameter) of the small diameter part 53 was set to 181 mm. Furthermore, a material of the shaft-like body 51 was set to carbon steel. A frequency of a high-frequency electric current flowing through the primary coil 100 was set to 1 kHz. A frequency at the time of heating the small diameter part 53 and a frequency at the time of heating the main body part 52 are the same.

Also, when the primary coil 100 was caused to traverse from the other side D2 (lower side) toward the one side D1 (upper side) of the shaft-like body 51 in the axis C direction while a high-frequency electric current was being supplied to the primary coil 100, the shaft-like body 51 was subjected to continuous induction heating in the axis C direction. FIG. 14 shows the analysis result of a maximum value of a surface temperature distribution of the shaft-like body 51 when the shaft-like body 51 is subjected to heating required for performing hardening up to a certain depth through traverse hardening.

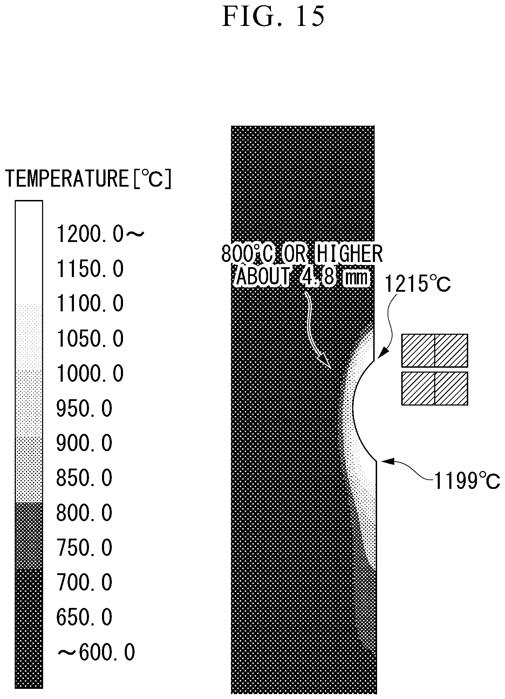

FIG. 15 shows the results of simulation analysis of a surface temperature distribution of the shaft-like body 51 when the shaft-like body 51 is subjected to induction heating using the primary coil 11 of the embodiment (that is, using the traverse hardening device 1 in the embodiment described above). FIG. 15 shows only the analysis result of the right half of the vertical cross-sectional view of the shaft-like body 51 with respect to the axis C.

Also in this simulation, the outer diameter of the main body part 52 (the first main body part 52A, the second main body part 52B) was set to 198 mm and the outer diameter (minimum diameter) of the small diameter part 53 was set to 181 mm. Furthermore, a material of the shaft-like body 51 was set to carbon steel. A frequency of a high-frequency electric current flowing through the primary coil 11 was set to 1 kHz.

Also, when the primary coil 11 was caused to traverse from the other side D2 (lower side) toward the one side D1 (upper side) of the shaft-like body 51 in the axis C direction while a high-frequency electric current was being supplied to the primary coil 11, the shaft-like body 51 was subjected to continuous induction heating in the axis C direction. FIG. 15 shows the analysis result of the surface temperature distribution of the shaft-like body 51 when the shaft-like body 51 is subjected to heating required for performing hardening up to a certain depth through traverse hardening.

As shown in FIG. 14, it was found that, when the shaft-like body 51 was subjected to induction heating using the primary coil 100 having a general cross-sectional shape (in the case of a comparative example), the small diameter part 53 is heated to 800°C or higher from the surface to a region having a depth of about 3.5 mm and a maximum value of the surface temperature distribution is 1225°C.

On the other hand, as shown in FIG. 15, it was found that, when the shaft-like body 51 is subjected to induction heating using the primary coil 11 in the embodiment (that is, using the traverse hardening device 1 and the traverse hardening method in the embodiment described above) (in the case of the example of the present invention), the small diameter part 53 is heated to 800°C or higher from the surface to a region having a depth of about 4.8 mm and a maximum value of the surface temperature distribution is 1215°C.

From the analysis result as described above, as compared with the comparative example, according to the example of the present invention, it was confirmed that the entire shaft state 51 can be heated at a high temperature of 800°C or higher in a deeper region from the surface and the shaft-like body 51 can be sufficiently heated and hardened as much as needed with a relatively simple constitution. Furthermore, as compared with the comparative example, according to the example of the present invention, it was confirmed that it is possible to minimize an overheating phenomenon by reducing a maximum value of a surface temperature of the shaft-like body 51.

### [Modified example of primary coil]

In the embodiment described above, in the plane orthogonal to the circumferential direction of the primary coil 11, when a horizontal axis represents the radial direction of the primary coil 11 and a vertical axis represents the direction orthogonal to the radial direction, a case in which the cross-sectional image of the primary coil 11 which appears on the plane appears in a form of segmentations by a matrix of 2 pieces vertically×2 pieces horizontally is illustrated. The cross-sectional shape of the primary coil of the present invention is not limited thereto and the cross-sectional image of the primary coil which appears on the plane may appear in a form of segmentations by a matrix of m pieces vertically×n pieces horizontally (m and n are each an integer of 2 or more than 2).

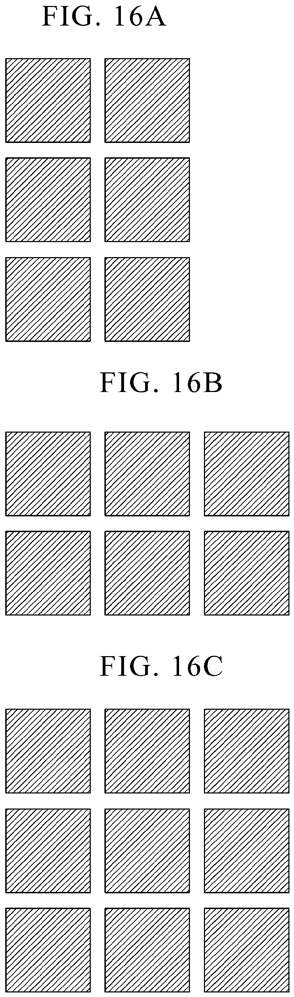

For example, as shown in FIG. 16A, the cross-sectional image of the primary coil which appears on the plane may appear in a form of segmentations by a matrix of 3 pieces vertically×2 pieces horizontally. Alternatively, as shown in FIG. 16B, the cross-sectional image of the primary coil which appears on the plane may appear in a form of segmentations by a matrix of 2 pieces vertically×3 piece horizontally. Alternatively, as shown in FIG. 16C, the cross-sectional image of the primary coil which appears on the plane may appear in a form of segmentations by a matrix of 3 pieces vertically×3 pieces horizontally.

### [Industrial Applicability]

According to the present invention, it is possible to provide a traverse hardening device capable of hardening a shaft-like body having a shape in which a diameter changes along an axis with a relatively simple constitution, and a traverse hardening method which can be realized using the traverse hardening device. Therefore, industrial applicability is high.

### [Brief Description of the Reference Symbols]

1 Traverse hardening device
11 Primary coil
12 Current transformer (electric current supply device)
36 Cooling ring
37 Pump (cooling liquid supply device)
39 Support sheet (mechanical element of uniaxial actuator)
40 Motor (mechanical element of uniaxial actuator)
42 Rack (mechanical element of uniaxial actuator)
46 Control device
51 Shaft-like body
52 Main body part
53 Small diameter part

## Claims

1. A traverse hardening device which performs traverse hardening on a shaft-like body which has a main body part, and a small diameter part provided in an intermediate section of the main body part in an axial direction and having an outer diameter smaller than that of the main body part, comprising:
a primary coil having an inner diameter larger than an outer diameter of the main body part and having a solenoidal shape;
an electric current supply device which supplies a high-frequency electric current to the primary coil;
a uniaxial actuator configured to enable positioning of the primary coil in the axial direction while supporting the primary coil so that the shaft-like body passes inside the primary coil in a radial direction; and
a control device which controls the electric current supply device and the uniaxial actuator,
wherein, when a horizontal axis represents a radial direction of the primary coil and a vertical axis represents a direction orthogonal to the radial direction in a plane orthogonal to a circumferential direction of the primary coil, a cross-sectional image of the primary coil which appears on the plane appears in a form of segmentations by a matrix of m pieces vertically×n pieces horizontally, wherein m and n are each an integer of 2 or more than 2.

2. The traverse hardening device according to claim 1, wherein the cross-sectional image of the primary coil which appears on the plane appears in a form of segmentations by a matrix of 2 pieces vertically×2 pieces horizontally.

3. The traverse hardening device according to claim 1 or 2, further comprising:
a cooling ring having an inner diameter larger than an outer diameter of the main body part and having an inner circumferential surface having a plurality of nozzles provided therein; and
a cooling liquid supply device which supplies a cooling liquid to the cooling ring,
wherein the uniaxial actuator is configured to enable positioning of the primary coil in the axial direction while supporting the primary coil and the cooling ring so that the shaft-like body passes inside the primary coil and the cooling ring in a radial direction and the primary coil is disposed on one side in the axial direction with respect to the cooing ring, and
the control device synchronously controls the uniaxial actuator, the electric current supply device, and the cooling liquid supply device so that the primary coil and the cooling ring traverse from the other side in the axial direction toward the one side while the high-frequency electric current is being supplied to the primary coil and the cooling liquid is being supplied to the cooling ring.

4. A traverse hardening method which performs traverse hardening on a shaft-like body which has a main body part and a small diameter part provided in an intermediate section of the main body part in an axial direction and having an outer diameter smaller than that of the main body part, comprising:
a first step of preparing a primary coil having an inner diameter larger than an outer diameter of the main body part and having a solenoidal shape; and
a second step of traversing the primary coil in the axial direction so that the shaft-like body passes inside the primary coil in a radial direction while supplying a high-frequency electric current to the primary coil,
wherein, when a horizontal axis represents a radial direction of the primary coil and a vertical axis represents a direction orthogonal to the radial direction in a plane orthogonal to a circumferential direction of the primary coil, a cross-sectional image of the primary coil which appears on the plane appears in a form of segmentations by a matrix of m pieces vertically×n pieces horizontally, wherein m and n are each an integer of 2 or more than 2.

5. The traverse hardening method according to claim 4, wherein the cross-sectional image of the primary coil which appears on the plane appears in a form of segmentations by a matrix of 2 pieces vertically×2 pieces horizontally.

6. The traverse hardening method according to claim 4 or 5, wherein the first step includes preparing a cooling ring having an inner diameter larger than an outer diameter of the main body part and having an inner circumferential surface having a plurality of nozzles provided therein, in addition to the primary coil, and
the second step includes traversing the primary coil and the cooling ring from the other side in the axial direction toward the one side so that the shaft-like body passes inside the primary coil and the cooling ring in the radial direction while supplying the high-frequency electric current to the primary coil and supplying a cooling liquid to the cooling ring in a state in which the primary coil is disposed on the one side in the axial direction with respect to the cooling ring.

## Patentansprüche

1. Traversalhärtungsvorrichtung, die eine Traversalhärtung an einem schaftartigen Körper durchführt, der einen Hauptkörperteil und einen Teil mit kleinem Durchmesser aufweist, der in einem Zwischenabschnitt des Hauptkörperteils in einer axialen Richtung vorgesehen ist und einen Außendurchmesser aufweist, der kleiner ist als der des Hauptkörperteils, umfassend:
eine Primärspule mit einem Innendurchmesser, der größer ist als ein Außendurchmesser des Hauptkörperteils, und mit einer Solenoidform;
eine elektrische Stromversorgungsvorrichtung, die einen hochfrequenten elektrischen Strom an die Primärspule zuführt;
einen einachsigen Aktuator, der so konfiguriert ist, dass er die Positionierung der Primärspule in der axialen Richtung ermöglicht, während er die Primärspule so stützt, dass der schaftartige Körper in einer radialen Richtung in die Primärspule hineinläuft; und
eine Steuervorrichtung, die die elektrische Stromversorgungsvorrichtung und den einachsigen Aktuator steuert,
wobei, wenn eine horizontale Achse eine radiale Richtung der Primärspule und eine vertikale Achse eine Richtung orthogonal zu der radialen Richtung in einer Ebene orthogonal zu einer Umfangsrichtung der Primärspule darstellt, ein Querschnittsbild der Primärspule, das auf der Ebene erscheint, in einer Form von Segmentierungen durch eine Matrix von m Stücken vertikal × n Stücken horizontal erscheint, wobei m und n jeweils eine ganze Zahl von 2 oder mehr als 2 sind.

2. Traversalhärtungsvorrichtung nach Anspruch 1, wobei das Querschnittsbild der Primärspule, das auf der Ebene erscheint, in Form von Segmentierungen durch eine Matrix von 2 Stücken vertikal × 2 Stücken horizontal erscheint.

3. Traversalhärtungsvorrichtung nach Anspruch 1 oder 2, ferner umfassend:
einen Kühlring mit einem Innendurchmesser, der größer ist als ein Außendurchmesser des Hauptkörperteils, und mit einer Innenumfangsfläche, in der eine Vielzahl von Düsen vorgesehen ist; und
eine Kühlflüssigkeitszuführvorrichtung, die eine Kühlflüssigkeit dem Kühlring zuführt,
wobei der uniaxiale Aktuator so konfiguriert ist, dass er die Positionierung der Primärspule in der axialen Richtung ermöglicht, während er die Primärspule und den Kühlring so stützt, dass der schaftartige Körper in eine radiale Richtung in die Primärspule und den Kühlring hineinläuft und die Primärspule in der axialen Richtung in Bezug auf den Kühlring auf einer Seite angeordnet ist, und
die Steuervorrichtung den einachsigen Aktuator, die elektrische Stromversorgungsvorrichtung und die Kühlflüssigkeitszuführvorrichtung synchron steuert, so dass die Primärspule und der Kühlring von der anderen Seite in der axialen Richtung zu der einen Seite hin durchlaufen, während der elektrische Hochfrequenzstrom an die Primärspule zugeführt wird und die Kühlflüssigkeit dem Kühlring zugeführt wird.

4. Traversalhärtungsverfahren, das eine Traversalhärtung an einem schaftartigen Körper durchführt, der einen Hauptkörperteil und einen Teil mit kleinem Durchmesser aufweist, der in einem Zwischenabschnitt des Hauptkörperteils in einer axialen Richtung vorgesehen ist und einen Außendurchmesser aufweist, der kleiner als der des Hauptkörperteils ist, umfassend:
einen ersten Schritt des Vorbereitens einer Primärspule mit einem Innendurchmesser, der größer als ein Außendurchmesser des Hauptkörperteils ist, und mit einer Solenoidform; und
einen zweiten Schritt des Durchquerens der Primärspule in der axialen Richtung, so dass der schaftartige Körper in einer radialen Richtung durch die Primärspule hineinläuft, während ein hochfrequenter elektrischer Strom an die Primärspule zugeführt wird,
wobei, wenn eine horizontale Achse eine radiale Richtung der Primärspule und eine vertikale Achse eine Richtung orthogonal zu der radialen Richtung in einer Ebene orthogonal zu einer Umfangsrichtung der Primärspule darstellt, ein Querschnittsbild der Primärspule, das auf der Ebene erscheint, in einer Form von Segmentierungen durch eine Matrix von m Stücken vertikal × n Stücken horizontal erscheint, wobei m und n jeweils eine ganze Zahl von 2 oder mehr als 2 sind.

5. Traversalhärtungsverfahren gemäß Anspruch 4, wobei das Querschnittsbild der Primärspule, das auf der Ebene erscheint, in Form von Segmentierungen durch eine Matrix von 2 Stücken vertikal × 2 Stücken horizontal erscheint.

6. Traversalhärtungsverfahren nach Anspruch 4 oder 5, wobei der erste Schritt das Vorbereiten eines Kühlrings mit einem Innendurchmesser, der größer als ein Außendurchmesser des Hauptkörperteils ist, und mit einer Innenumfangsfläche, in der eine Vielzahl von Düsen vorgesehen ist, zusätzlich zu der Primärspule umfasst, und
der zweite Schritt das Durchqueren der Primärspule und des Kühlrings von der anderen Seite in der axialen Richtung zu der einen Seite umfasst, so dass der schaftartige Körper in der radialen Richtung in die Primärspule und den Kühlring hineinläuft, während der elektrische Hochfrequenzstrom der Primärspule zugeführt wird und dem Kühlring eine Kühlflüssigkeit zugeführt wird, in einem Zustand, in dem die Primärspule auf der einen Seite in der axialer Richtung in Bezug auf den Kühlring angeordnet ist.

## Revendications

1. Dispositif de durcissement transversal qui réalise le durcissement transversal sur un corps en forme d'arbre, qui a une partie de corps principal, et une partie de petit diamètre prévue dans une section intermédiaire de la partie de corps principal dans une direction axiale et ayant un diamètre externe inférieur à celui de la partie de corps principal, comprenant :
une bobine principale ayant un diamètre interne supérieur au diamètre externe de la partie de corps principal et ayant une forme solénoïdale ;
un dispositif d'alimentation en courant électrique qui fournit un courant électrique haute fréquence à la bobine principale ;
un actionneur uniaxial configuré pour permettre le positionnement de la bobine principale dans la direction axiale tout en supportant la bobine principale de sorte que le corps en forme d'arbre passe à l'intérieur de la bobine principale dans une direction radiale ; et
un dispositif de commande qui commande le dispositif d'alimentation en courant électrique et l'actionneur uniaxial,
dans lequel, lorsqu'un axe horizontal représente une direction radiale de la bobine principale et qu'un axe vertical représente une direction orthogonale à la direction radiale dans un plan orthogonal à une direction circonférentielle de la bobine principale, une image transversale de la bobine principale qui apparaît sur le plan, apparaît sous une forme de segmentations par une matrice de m pièces verticalement x n pièces horizontalement, dans lequel m et n sont chacun un nombre entier de 2 ou supérieur à 2.

2. Dispositif de durcissement transversal selon la revendication 1, dans lequel l'image transversale de la bobine principale qui apparaît sur le plan, apparaît dans une forme de segmentations par une matrice de 2 pièces verticalement x 2 pièces horizontalement.

3. Dispositif de durcissement transversal selon la revendication 1 ou 2, comprenant en outre :
une bague de refroidissement ayant un diamètre interne supérieur à un diamètre externe de la partie de corps principal et ayant une surface circonférentielle interne ayant une pluralité de buses prévues à l'intérieur de cette dernière ; et
un dispositif d'alimentation en liquide de refroidissement qui fournit un liquide de refroidissement à la bague de refroidissement,
dans lequel l'actionneur uniaxial est configuré pour permettre le positionnement de la bobine principale dans la direction axiale tout en supportant la bobine principale et la bague de refroidissement de sorte que le corps en forme d'arbre passe à l'intérieur de la bobine principale et la bague de refroidissement dans une direction radiale et la bobine principale est disposée sur un côté dans la direction axiale par rapport à la bague de refroidissement, et
le dispositif de commande commande de manière synchrone l'actionneur uniaxial, le dispositif d'alimentation en courant électrique et le dispositif d'alimentation en liquide de refroidissement de sorte que la bobine principale et la bague de refroidissement traversent de l'autre côté dans la direction axiale vers le premier côté alors que le courant électrique haute fréquence est alimenté à la bobine principale et que le liquide de refroidissement est alimenté à la bague de refroidissement.

4. Procédé de durcissement transversal qui réalise le durcissement transversal sur un corps en forme d'arbre qui a une partie de corps principal et une partie de petit diamètre prévue dans une section intermédiaire de la partie de corps principal dans une direction axiale et ayant un diamètre externe inférieur à celui de la partie de corps principal, comprenant :
une première étape de préparation d'une bobine principale ayant un diamètre interne supérieur à un diamètre externe de la partie de corps principal et ayant une forme solénoïdale ; et
une deuxième étape de traversée de la bobine principale dans la direction axiale de sorte que le corps en forme d'arbre passe à l'intérieur de la bobine principale dans une direction radiale tout en fournissant un courant électrique haute fréquence à la bobine principale,
dans lequel, lorsqu'un axe horizontal représente une direction radiale de la bobine principale et qu'un axe vertical représente une direction orthogonale à la direction radiale dans un plan orthogonal à une direction circonférentielle de la bobine principale, une image transversale de la bobine principale qui apparaît sur le plan, apparaît sous une forme de segmentations par une matrice de m pièces verticalement x n pièces horizontalement, dans lequel m et n sont chacun un nombre entier de 2 ou supérieur à 2.

5. Procédé de durcissement transversal selon la revendication 4, dans lequel l'image transversale de la bobine principale qui apparaît sur le plan, apparaît sous une forme de segmentations par une matrice de 2 pièces verticalement x 2 pièces horizontalement.

6. Procédé de durcissement transversal selon la revendication 4 ou 5, dans lequel la première étape comprend la préparation d'une bague de refroidissement ayant un diamètre interne supérieur à un diamètre externe de la partie de corps principal et ayant une surface circonférentielle interne ayant une pluralité de buses prévues dans cette dernière, en plus de la bobine principale, et
la deuxième étape comprend la traversée de la bobine principale et de la bague de refroidissement à partir de l'autre côté dans la direction axiale vers le premier côté de sorte que le corps en forme d'arbre passe à l'intérieur de la bobine principale et de la bague de refroidissement dans la direction radiale tout en fournissant le courant électrique haute fréquence à la bobine principale et en fournissant un liquide de refroidissement à la bague de refroidissement dans un état dans lequel la bobine principale est disposée sur le premier côté dans la direction axiale par rapport à la bague de refroidissement.
